# EUROPEAN PATENT APPLICATION

(11) **EP 3 859 040 A1**
(43) Date of publication of application: **04.08.2021**
(21) Application number: 19866287.6
(22) Date of filing: 23.09.2019
(51) Int. Cl.: C22C 38/34, C22C 38/38, C22C 38/22, C22C 38/24, C22C 38/32, C22C 38/02, C22C 38/06, C22C 38/04, C21D 8/02

(54) **WEAR RESISTANT STEEL HAVING EXCELLENT HARDNESS AND IMPACT TOUGHNESS AND METHOD OF MANUFACTURING THE SAME**

(30) Priority: 27.09.2018 KR 20180115157
(71) Applicant: POSCO, Gyeongsangbuk-do 37859 (KR)
(72) Inventor: YU, Seng-Ho, Pohang-si, Gyeongsangbuk-do 37877 (KR); JUNG, Young-Jin, Pohang-si, Gyeongsangbuk-do 37877 (KR); CHO, Nam-Young, Seoul 06194 (KR)
(74) Representative: Zech, Stefan Markus
(86) International application number: PCT/KR2019/012322
(87) International publication number: WO 2020/067685

(57) **Abstract**

One embodiment of the present invention provides a wear-resistant steel having excellent hardness and impact toughness and a method of manufacturing same. In particular, the wear-resistant steel comprises carbon (C): 0.38-0.50%, silicon (Si): 0.5-2.0%, manganese (Mn): 0.6-1.6%, phosphorus (P): 0.05% or less (excluding 0), sulfur (S): 0.02% or less (excluding 0), aluminum (Al): 0.07% or less (excluding 0), chromium (Cr) : 0.1-1.5%, molybdenum (Mo) : 0.01-0.8%, vanadium (V) : 0.01-0.08%, boron (B) : 50 ppm or less (excluding 0), and cobalt (Co): 0.02% or less (excluding 0). The wear-resistant steel additionally further comprises one or more selected from the group consisting of nickel (Ni): 0.5% or less (excluding 0), copper (Cu) : 0.5% or less (excluding 0), titanium (Ti) : 0.02% or less (excluding 0), niobium (Nb): 0.05% or less (excluding 0), and calcium (Ca) : 2-100 ppm, and a balance of Fe and other inevitable impurities, and comprises, as microstructures, 85-98 area% or more of martensite, 1-10% of bainite, and 1-10% of retained austenite

## Description

### [Technical Field]

The present disclosure relates to a high-hardness wear-resistant steel and a method of manufacturing the same, and more particularly, to a high-hardness wear-resistant steel usable in construction machinery, and a method of manufacturing the same.

### [Background Art]

In the case of construction machinery and industrial machinery used in many industrial fields such as construction, civil engineering, mining industry, cement industry, and the like, it is necessary to apply a material exhibiting the characteristics of wear resistance as abrasion due to friction occurs severely during work.

In general, abrasion resistance and hardness of a thick steel plate are correlated with each other, and thus, it is necessary to increase the hardness of a thick steel plate that is concerned about abrasion. In order to secure more stable wear resistance, having uniform hardness from the surface of the thick steel plate to the inside (in the vicinity of t/2, t = thickness) of the plate thickness (for example, having the same degree of hardness on the surface and inside of the thick steel plate) is required.

In general, a method of quenching, after rolling and then reheating to a temperature of Ac3 or higher, is widely used to obtain high hardness in a thick steel sheet. For example, Patent Document 1 discloses a method of increasing the surface hardness by increasing the C content and adding a large amount of hardenability enhancing elements such as Cr and Mo. However, to manufacture an extremely thick steel sheet, it is required to add more hardenable elements to secure hardenability in the center of the steel sheet, and as C and hardenable alloys are added in large amounts, there is a problem in that manufacturing costs increase and weldability and low-temperature toughness deteriorate.

Therefore, in a situation in which addition of a hardenable alloy is inevitable to secure hardenability, there is a need for a method of securing high strength and high impact toughness as well as excellent abrasion resistance by securing high hardness.

### [Prior technical literature]

(Patent Document 1) Japanese Laid-Open Patent Publication No. 1986-166954

### [Disclosure]

### [Technical Problem]

An aspect of the present disclosure is to provide a high-hardness wear-resistant steel having high strength and high impact toughness while having excellent wear resistance, and a method of manufacturing the same.

### [Technical Solution]

According to an aspect of the present disclosure, a wear-resistant steel having excellent hardness and impact toughness, comprises in % by weight, carbon (C) : 0.38 to 0.50%, silicon (Si): 0.5 to 2.0%, manganese (Mn): 0.6 to 1.6%, phosphorus (P) : 0.05% or less (excluding 0%), sulfur (S): 0.02% or less (excluding 0%), aluminum (Al) : 0.07% or less (excluding 0%), chromium (Cr) : 0.1 to 1.5%, molybdenum (Mo) : 0.01 to 0.8%, vanadium (V) : 0.01 to 0.08%, boron (B) : 50ppm or less (excluding 0%), and cobalt (Co): 0.02% or less (excluding 0%), the wear-resistant steel further comprising at least one selected from the group consisting of nickel (Ni): 0.5% or less (excluding 0%), copper (Cu): 0.5% or less (excluding 0%), titanium (Ti) : 0.02% or less (excluding 0%), niobium (Nb) : 0.05% or less (excluding 0%) and calcium (Ca) : 2 to 100ppm, and containing a balance of Fe and other inevitable impurities. A microstructure of the wear-resistant steel comprises 85 to 98 area% or more of martensite, 1 to 10% of bainite, and 1 to 10% of retained austenite.

According to another aspect of the present disclosure, a method of manufacturing a wear-resistant steel having excellent hardness and impact toughness, includes: heating a steel slab in a temperature range of 1050 to 1250°C, the steel slab comprising, in % by weight, carbon (C): 0.38 to 0.50%, silicon (Si): 0.5 to 2.0%, manganese (Mn): 0.6 to 1.6%, phosphorus (P) : 0.05% or less (excluding 0%), sulfur (S): 0.02% or less (excluding 0%), aluminum (Al) : 0.07% or less (excluding 0%), chromium (Cr) : 0.1 to 1.5%, molybdenum (Mo) : 0.01 to 0.8%, vanadium (V) : 0.01 to 0.08%, boron (B) : 50ppm or less (excluding 0%), and cobalt (Co): 0.02% or less (excluding 0%), the wear-resistant steel further comprising at least one selected from the group consisting of nickel (Ni): 0.5% or less (excluding 0%), copper (Cu): 0.5% or less (excluding 0%), titanium (Ti) : 0.02% or less (excluding 0%), niobium (Nb) : 0.05% or less (excluding 0%) and calcium (Ca) : 2 to 100ppm, and containing a balance of Fe and other inevitable impurities; rough rolling the steel slab reheated, in a temperature range of 950 to 1050°C to obtain a rough-rolled bar; obtaining a hot-rolled steel sheet by finishing hot-rolling the rough-rolled bar in a temperature range of 850 to 950°C; and accelerating cooling the hot-rolled steel sheet from a temperature of Ac3+30°C or higher to Ms-50°C or lower at a cooling rate of 5°C/s or higher.

### [Advantageous Effects]

According to an exemplary embodiment, there is an effect of providing a wear-resistant steel having high hardness and excellent low-temperature toughness, while having a thickness of 60 mm or less.

### [Best Mode for Invention]

Hereinafter, an exemplary embodiment of the present disclosure will be described in detail. First, an alloy composition according to an exemplary embodiment will be described. The content of the alloy composition described below is in the unit of weight%.

### Carbon (C): 0.38-0.50%

Carbon (C) is effective in increasing the strength and hardness in a steel having a martensitic structure, and is an effective element for improving hardenability. To sufficiently secure the above-described effect, it may be preferable to add 0.38% or more, but if the content exceeds 0.50%, there is a problem of impairing weldability and toughness. Therefore, in the present disclosure, it may be preferable to control the content of C to 0.38 to 0.50%. The lower limit of the C content may be more preferably 0.39%, even more preferably 0.40%, and most preferably 0.41%. The upper limit of the C content may be more preferably 0.49%, even more preferably 0.48%, and most preferably 0.47%.

### Silicon (Si): 0.5-2.0%

Silicon (Si) is an element that is effective in improving strength due to deoxidation and solid solution strengthening. In addition, silicon serves to suppress the formation of cementite (Fe₃C) and increasing the residual austenite content when subjected to heat treatment at a predetermined temperature after being supercooled to the martensite transformation start temperature (Ms) or lower. To obtain the above effect, it may be preferable to add 0.5% or more, but if the content exceeds 2.0%, weldability deteriorates, which may not be preferable. Therefore, in the present disclosure, it may be preferable to control the content of Si to 0.5 to 2.0%. The lower limit of the Si content may be more preferably 0.6%, even more preferably 0.65%, and most preferably 0.7%. The upper limit of the Si content may be more preferably 1.9%, even more preferably 1.8%, and most preferably 1.7%.

### Manganese (Mn): 0.6-1.6%

Manganese (Mn) is an element that suppresses ferrite formation and increases the hardenability effectively by lowering the Ar3 temperature, thereby improving the strength and toughness of steel. In the present disclosure, to secure the hardness of a thick material, it may be preferable to contain the Mn in an amount of 0.6% or more, but if the content thereof exceeds 1.6%, there is a problem of lowering the weldability. Therefore, in the present disclosure, it may be preferable to control the content of Mn to 0.6% to 1.6%. The lower limit of the Mn content may be more preferably 0.65%, even more preferably 0.7%, and most preferably 0.75%. The upper limit of the Mn content may be more preferably 1.55%, even more preferably 1.5%, and most preferably 1.45%.

### Phosphorus (P): 0.05% or less (excluding 0%)

Phosphorus (P) is an element that is inevitably contained in steel and is an element inhibiting the toughness of steel. Therefore, it may be preferable to control the P content to be 0.05% or less by lowering the content of P as much as possible, but 0% is excluded in consideration of the inevitably contained level. The P content may be more preferably 0.03% or less, even more preferably 0.02% or less, and most preferably 0.015% or less.

### Sulfur (S): 0.02% or less (excluding 0%)

Sulfur (S) is an element that inhibits the toughness of steel by forming MnS inclusions in the steel. Therefore, it may be preferable to control the content of S to be 0.02% or less by lowering the content of S as much as possible, but 0% is excluded in consideration of the inevitably contained level. The S content may be more preferably 0.01% or less, even more preferably 0.005% or less, and most preferably 0.003% or less.

### Aluminum (Al): 0.07% or less (excluding 0%)

Aluminum (Al) is an element that is effective in lowering the oxygen content in molten steel, as a deoxidizing agent for steel. If the Al content exceeds 0.07%, it may not be preferable because there is a problem that the cleanliness of the steel is impaired. Therefore, in the present disclosure, it may be preferable to control the Al content to 0.07% or less, and 0% is excluded in consideration of an increase in the load and manufacturing costs during a steelmaking process. The Al content may be more preferably 0.06% or less, even more preferably 0.05% or less, and most preferably 0.04% or less.

### Chrome (Cr): 0.1-1.5%

Chromium (Cr) is an element that increases the strength of steel by increasing hardenability and is advantageous in securing hardness. For the above-described effect, it may be preferable to add Cr in an amount of 0.1% or more, but if the content thereof exceeds 1.5%, the probability of occurrence of cracks during cooling increases during continuous casting for manufacturing slabs. Therefore, in the present disclosure, it may be preferable to control the content of Cr to 0.1 to 1.5%. The lower limit of the Cr content may be more preferably 0.15%, even more preferably 0.2%, and most preferably 0.25%. The upper limit of the Cr content may be more preferably 1.4%, even more preferably 1.3%, and most preferably 1.2%.

### Molybdenum (Mo): 0.01-0.8%

Molybdenum (Mo) increases the hardenability of steel, and is an element that is significantly effective in improving the hardness of thick materials. To sufficiently obtain the above-described effect, it may be preferable to add Mo in an amount of 0.01% or more, but the Mo is also an expensive element, and if the content thereof exceeds 0.8%, manufacturing cost increases and weldability is poor. Therefore, in the present disclosure, it may be preferable to control the content of Mo to 0.01 to 0.8%. The lower limit of the Mo content may be more preferably 0.015%, even more preferably 0.02%, and most preferably 0.025%. The upper limit of the Mo content may be more preferably 0.75%, even more preferably 0.7%, and most preferably 0.65%.

### Vanadium (V): 0.01-0.08%

Vanadium (V) is an advantageous element in securing strength and toughness by inhibiting the growth of austenite grains and improving the hardenability of steel by forming VC carbides upon reheating after hot rolling. To sufficiently secure the above-described effect, it may be preferable to add 0.01% or more, but if the content thereof exceeds 0.08%, it is a factor that increases the manufacturing cost. Therefore, in the present disclosure, it may be preferable to control the content of V to 0.01 to 0.08%. The lower limit of the V content may be more preferably 0.012%, even more preferably 0.015%, and most preferably 0.017%. The upper limit of the V content may be more preferably 0.07%, even more preferably 0.065%, and most preferably 0.06%.

### Boron (B): 50ppm or less (excluding 0%)

Boron (B) is an element effective in improving the strength by effectively increasing the hardenability of steel even with a small amount of addition. However, if the content is excessive, there is a problem that the excessive content rather deteriorates the toughness and weldability of steel, and thus, it may be preferable to control the content to 50 ppm or less. The lower limit of the B content may be more preferably 2 ppm, even more preferably 3 ppm, and most preferably 5 ppm. The upper limit of the B content may be more preferably 40 ppm, even more preferably 35 ppm, and most preferably 30 ppm.

### Cobalt (Co): 0.02% or less (excluding 0%)

Cobalt (Co) is an element that is advantageous in securing hardness as well as strength of steel by increasing the hardenability of steel. However, if the content exceeds 0.02%, there is a concern that the hardenability of the steel may decrease, and the cobalt is an expensive element and is a factor increasing the manufacturing cost. Therefore, in the present disclosure, it may be preferable to add Co in an amount of 0.02% or less. The lower limit of the Co content may be more preferably 0.001%, even more preferably 0.002% or less, and most preferably 0.003% or less. The upper limit of the Co content may be more preferably 0.018%, even more preferably 0.015%, and most preferably 0.013%.

In addition to the above-described alloy composition, the wear-resistant steel according to an exemplary embodiment of the present disclosure may further include elements advantageous for securing the target physical properties in the present disclosure. For example, the wear-resistant steel may further include at least one selected from the group consisting of nickel (Ni) : 0.5% or less (excluding 0%), copper (Cu) : 0.5% or less (excluding 0%), titanium (Ti) : 0.02% or less (excluding 0%), niobium (Nb) : 0.05% or less (excluding 0%) and calcium (Ca) : 2-100ppm.

### Nickel (Ni): 0.5% or less (excluding 0%)

Nickel (Ni) is an element that is effective in improving toughness as well as strength of steel in general. However, if the content exceeds 0.5%, it causes an increase in manufacturing cost. Therefore, when adding Ni, it may be preferable to add 0.5% or less. The lower limit of the Ni content may be more preferably 0.01%, even more preferably 0.03%, and most preferably 0.05%. The upper limit of the Ni content may be more preferably 0.45%, even more preferably 0.4%, and most preferably 0.35%.

### Copper (Cu): 0.5% or less (excluding 0%)

Copper (Cu) is an element that improves the hardenability of steel and improves the strength and hardness of steel through solid solution strengthening. However, if the content of Cu exceeds 0.5%, surface defects are generated and there is a problem of impairing hot workability. Therefore, when the Cu is added, it may be preferable to add Cu in an amount of 0.5% or less. The lower limit of the Cu content may be more preferably 0.01%, even more preferably 0.02%, and most preferably 0.03%. The upper limit of the Cu content may be more preferably 0.4%, even more preferably 0.3%, and most preferably 0.2%.

### Titanium (Ti): 0.02% or less (excluding 0%)

Titanium (Ti) is an element that maximizes the effect of B, an element effective in improving the hardenability of steel. In detail, the Ti combines with nitrogen (N) to form TiN precipitates, thereby inhibiting the formation of BN and thus increasing the solid solution B, to significantly increase the improvement of hardenability. However, if the content of Ti exceeds 0.02%, coarse TiN precipitates are formed, and there is a problem that the toughness of the steel is inferior. Therefore, in the present disclosure, when the Ti is added, it may be preferable to add 0.02% or less. The lower limit of the Ti content may be more preferably 0.002%, even more preferably 0.005%, and most preferably 0.007%. The upper limit of the Ti content may be more preferably 0.018%, even more preferably 0.016%, and most preferably 0.015%.

### Niobium (Nb): 0.05% or less (excluding 0%)

Niobium (Nb) is dissolved in austenite to increase the hardenability of austenite, and is effective in forming carbonitrides such as Nb (C,N) or the like to increase the strength of steel and to suppress austenite grain growth. However, if the content of Nb exceeds 0.05%, coarse precipitates are formed, which becomes a starting point of brittle fracture and impairs toughness. Therefore, in the present disclosure, when the Nb is added, it may be preferably added in an amount of 0.05% or less. The lower limit of the Nb content may be more preferably 0.002%, even more preferably 0.003%, and most preferably 0.005%. The upper limit of the Nb content may be more preferably 0.04%, even more preferably 0.03%, and most preferably 0.02%.

### Calcium (Ca): 2-100ppm

Calcium (Ca) has good bonding strength with S to generate CaS, and thus, is effective in suppressing the generation of MnS segregated in the center of the thickness of the steel material. In addition, CaS generated by the addition of Ca has an effect of increasing corrosion resistance in a humid external environment. For the above-described effect, it may be preferable to add the Ca in an amount of 2 ppm or more, but if the content exceeds 100 ppm, it may not be preferable because there is a problem of causing clogging of the nozzle during a steelmaking process. Therefore, in the present disclosure, it may be preferable to control the content of Ca to 2 to 100 ppm when the Ca is added. The lower limit of the Ca content may be more preferably 2.5 ppm, even more preferably 3 ppm, and most preferably 3.5 ppm. The upper limit of the Ca content may be more preferably 70 ppm, even more preferably 50 ppm, and most preferably 30 ppm.

In addition, the wear-resistant steel according to an exemplary embodiment of the present disclosure may further include at least one selected from the group consisting of arsenic (As): 0.05% or less (excluding 0%), tin (Sn): 0.05% or less (excluding 0%), and tungsten (W) : 0.05% or less (excluding 0%) in addition to the alloying elements described above.

The As is effective in improving the toughness of the steel, and the Sn is effective in improving the strength and corrosion resistance of the steel. In addition, W is an element that increases hardenability, improves strength, and improves hardness at high temperatures. However, if the contents of As, Sn, and W each exceed 0.05%, not only the manufacturing costs increase, but there is a concern that the physical properties of the steel may deteriorate. Therefore, in the present disclosure, when the As, Sn and W are additionally included, it may be preferable to control the content to 0.05% or less, respectively. The lower limit of each of the As, Sn and W contents may be more preferably 0.001%, more preferably 0.002%, and most preferably 0. 003%. The upper limit of each of the As, Sn and W contents may be more preferably 0.04%, even more preferably 0.03%, and most preferably 0.02%.

The remaining component of the wear resistant steel according to an exemplary embodiment is iron (Fe). However, since unintended impurities from the raw material or the surrounding environment may inevitably be mixed in the normal manufacturing process, this cannot be excluded. Since these impurities are known to anyone of ordinary skill in the manufacturing process, all the contents are not specifically mentioned in the present specification.

It may be preferable that the microstructure of the wear-resistant steel of the present disclosure includes martensite as a matrix structure. In more detail, the wear-resistant steel according to an exemplary embodiment of the present disclosure may preferably contain 85 to 98 area% of martensite, 1 to 10% of bainite, and 1 to 10% of retained austenite. Bainite is a hard phase compared to ferrite, but is a soft phase compared to martensite, and thus, may not be preferable as the main structure of Giga-class wear-resistant steel. Retained austenite refers to austenite remaining without being able to be phase transformed into martensite when it is rapidly cooled to room temperature while heat-treating in an austenite region of the Ac3 temperature or more, and may be characterized in having a relatively small amount of carbon compared to martensite.

If the fraction of martensite is less than 85%, there is a problem that it is difficult to secure the strength and hardness of the target level, and if it exceeds 98%, there is a disadvantage in that low-temperature impact toughness is deteriorated. In the present disclosure, the martensite includes a martensite phase and a tempered martensite phase, and when the tempered martensite phase is included as described above, the toughness of the steel may be more advantageously secured. The lower limit of the martensite fraction may be more preferably 86%, even more preferably 87%, and most preferably 88%. The upper limit of the martensite fraction may be more preferably 97%, even more preferably 96%, and most preferably 95%. On the other hand, the bainite and retained austenite serve to further improve the low-temperature impact toughness. If the fraction of bainite is less than 1%, the impact toughness at low temperature is not sufficient and cracks may occur, and if it exceeds 10%, it is relatively soft compared to martensite, and thus, the hardness may decrease. If the fraction of the retained austenite is less than 1%, there is a disadvantage that the low-temperature impact toughness is also deteriorated, and if it exceeds 10%, the low-temperature toughness is greatly increased, but the hardness is significantly reduced. The lower limit of the fraction of each of bainite and retained austenite may be more preferably 2%, even more preferably 3%, and most preferably 4%. The upper limit of the fraction of each of bainite and retained austenite may be more preferably 9%, even more preferably 8%, and most preferably 7%.

The wear-resistant steel according to an exemplary embodiment of the present disclosure provided as described above has the effect of securing a surface hardness of 550 to 650HB and also having an impact absorption energy of 47J or more at a low temperature of -40°C. However, the HB represents the surface hardness of the steel measured by the Brinell hardness tester.

In addition, it may be preferable that the wear-resistant steel according to an exemplary embodiment has hardness (HB) and impact absorption energy (J) satisfying the following relational expression 1. In the present disclosure, it is characterized by improving low-temperature toughness properties in addition to high hardness, and to this end, the following relational expression 1 may be satisfied. In detail, if only the surface hardness is high and the impact toughness is inferior and thus the relational expression 1 is not satisfied, or if the impact toughness is excellent but the surface hardness does not meet the target value and thus the relational expression 1 is not satisfied, the final target high hardness and low temperature toughness characteristics may not be guaranteed.

[Relational Expression 1] 0.61 ≤ HB ÷ J × (1-Vm ÷ 100) ≤ 1.13 (where HB is the surface hardness of the steel measured by Brinell hardness tester, J is the impact absorption energy value at -40°C, and Vm is Vm is the area fraction of martensite) .

Hereinafter, a method of manufacturing a wear-resistant steel according to an exemplary embodiment of the present disclosure will be described in detail.

First, a steel slab is heated at a temperature ranging from 1050 to 1250°C. If the slab heating temperature is less than 1050°C, re-solid solution of Nb or the like is not sufficient. On the other hand, if the temperature exceeds 1250°C, austenite grains may coarsen, resulting in forming a non-uniform structure. Therefore, in the present disclosure, it may be preferable that the heating temperature of the steel slab has a range of 1050 to 1250°C. The lower limit of the heating temperature of the steel slab may be more preferably 1070°C, even more preferably 1080°C, and most preferably 1100°C. The upper limit of the heating temperature of the steel slab may be more preferably 1230°C, even more preferably 1200°C, and most preferably 1180°C.

The reheated steel slab is roughly rolled at a temperature ranging from 950 to 1050°C to obtain a rough rolled bar. If the temperature is less than 950°C during the rough rolling, the rolling load increases and the pressure is relatively weakened, so that the deformation cannot be sufficiently transmitted to the center of the slab in the thickness direction, and thus, defects such as voids may not be removed. On the other hand, if the temperature exceeds 1050°C, recrystallization occurs at the same time as rolling, and then grains grow, and there is a fear that the initial austenite grains become too coarse. Therefore, in the present disclosure, the rough rolling temperature may be preferably 950 - 1050°C. The lower limit of the rough rolling temperature may be more preferably 960°C, even more preferably 970°C, and most preferably 980°C. The upper limit of the rough rolling temperature may be more preferably 1040°C, even more preferably 1030°C, and most preferably 1020°C.

The rough-rolled bar is finish hot-rolled in a temperature range of 850 to 950°C to obtain a hot-rolled steel sheet. If the finish hot rolling temperature is less than 850°C, there is a concern that ferrite may be generated in the microstructure due to two-phase region rolling. On the other hand, if the temperature exceeds 950°C, there is a problem in which the grain size of the final structure becomes coarse, resulting in poor low-temperature toughness. Therefore, in the present disclosure, the finish hot rolling temperature may be preferably 850 - 950°C. The lower limit of the finish hot rolling temperature may be more preferably 860°C, even more preferably 870°C, and most preferably 880°C. The upper limit of the finish hot rolling temperature may be more preferably 945°C, even more preferably 940°C, and most preferably 935°C.

Thereafter, the hot-rolled steel sheet is accelerating cooled to Ms-50 °C or lower at a temperature of Ac3+30°C or higher. The Ac3 is the austenite transformation temperature, and Ms is the temperature at which the transformation of martensite begins. For example, the accelerated cooling is for transforming the microstructure of the hot-rolled steel sheet obtained after hot rolling, from austenite to martensite. If the cooling start temperature is less than Ac3+30°C, the size of austenite recrystallized after rolling becomes coarse, resulting in inferior low-temperature impact toughness, and furthermore, air-cooled ferrite is produced, resulting in heterogeneous final microstructure and a significant reduction in strength and hardness. Therefore, the accelerated cooling start temperature may be preferably Ac3+30°C or higher. The accelerated cooling start temperature may be more preferably Ar3+50°C or higher, even more preferably Ar3+80°C or higher, and most preferably Ar3+100°C or higher. On the other hand, if the accelerated cooling stop temperature exceeds Ms-50°C, the phase transformation driving force is insufficient, and as a result, martensite is not generated, but a relatively soft phase such as bainite or acicular ferrite, compared to martensite, develops, and thus, it may be difficult to obtain the microstructure fraction to be obtained in an exemplary embodiment of the present disclosure. Therefore, in an exemplary embodiment of the present disclosure, it may be preferable that the accelerated cooling stop temperature is Ms-50°C or less. The accelerated cooling stop temperature may be more preferably Ms-70°C or less, even more preferably Ms-100°C or less, and most preferably Ms-150°C or less.

In the accelerated cooling, the cooling rate may be preferably 5°C/s or more. In this case, the cooling rate is based on a location of a quarter of the thickness of the steel sheet. If the cooling rate is less than 5°C/s, even if the accelerated cooling stop temperature is Ms-50°C or lower that is relatively low, the driving force for phase transformation is lowered, resulting in inevitable generation of acicular ferrite or bainite having a soft phase. Therefore, in an exemplary embodiment of the present disclosure, the cooling rate during the accelerated cooling may be preferably 5°C/s or more. The accelerated cooling rate may be more preferably 7°C or higher, even more preferably 10°C or higher, and most preferably 15°C or higher. On the other hand, in the present disclosure, the upper limit of the cooling rate is not particularly limited, and a person of ordinary skill in the art may appropriately set the upper limit thereof in consideration of the facility limit.

Thereafter, the cooled hot-rolled steel sheet may be subjected to a subsequent heat treatment such as tempering, if necessary. In more detail, the cooled hot-rolled steel sheet may be heated to a temperature range of 350 to 600°C and may then be subjected to heat treatment for 1.3t+5 minutes to 1.3t+20 minutes (where t is a plate thickness). If the tempering temperature is less than 350°C, embrittlement of tempered martensite occurs, and there is a concern that the strength and toughness of the steel may be inferior. On the other hand, if the temperature exceeds 600°C, the dislocation density in martensite, which has been increased through reheating and cooling, decreases rapidly, and as a result, the hardness may decrease compared to the target value, which may not be preferable. In addition, if the tempering time exceeds 1.3t+20 minutes (where t is a plate thickness), the high dislocation density in the martensite structure generated after rapid cooling is also lowered, resulting in a sharp drop in hardness. On the other hand, the tempering time should be 1.3t+5 minutes or more (where t is a plate thickness) . If the tempering time is less than 1.3t + 5 minutes (where t is a plate thickness), heat treatment may not be uniformly performed in the width and length direction of the steel sheet, resulting in variations in physical properties for respective locations. On the other hand, it may be preferable to perform air cooling treatment after the heat treatment. The lower limit of the tempering temperature may be more preferably 360°C, even more preferably 370°C, and most preferably 380°C. The upper limit of the tempering temperature may be more preferably 580°C, even more preferably 560°C, and most preferably 550°C. The lower limit of the tempering time may be more preferably 1.3t+6 minutes, even more preferably 1.3t+7 minutes, and most preferably 1.3t+8 minutes. The upper limit of the tempering may be more preferably 1.3t+18 minutes, even more preferably 1.3t+16 minutes, and most preferably 1.3t+15 minutes.

The hot-rolled steel sheet according to an exemplary embodiment of the present disclosure, subjected to the above process conditions, may be a thick steel sheet having a thickness of 60 mm or less, and in detail, may have a thickness of 15 to 60 mm, in more detail, 20 to 50 mm.

### [Mode for Invention]

Hereinafter, the present disclosure will be described in more detail through examples. However, it should be noted that the following examples are for illustrative purposes only and are not intended to limit the scope of the present disclosure. This is because the scope of the present disclosure is determined by matters described in the claims and matters reasonably inferred therefrom.

### (Example)

After preparing the steel slab having the alloy composition of Tables 1 and 2 below, the steel slab was subjected to heating-rough rolling-hot rolling-accelerated cooling- (tempering) under the conditions of Table 3 below, and thus, a hot-rolled steel sheet was manufactured. After measuring the microstructure and mechanical properties of the hot-rolled steel sheet, the measurement result is illustrated in Table 4 below.

In this case, in the case of the microstructure, after the specimen was cut to an arbitrary size, a mirror surface was prepared, and then corroded using a nital etching solution, and then, the 1/4t position was observed based on the thickness direction of the steel sheet using an optical microscope and an electron scanning microscope.

In addition, hardness and toughness were measured using a Brinell hardness tester (load 3000kgf, 10mm tungsten indentation ball) and a Charpy impact tester, respectively. At this time, as the surface hardness, the average value of three measurements after milling the plate surface by 2 mm was used. In addition, the Charpy impact test result used the average value of three measurements at -40 °C after taking the specimen at the 1/4t position.

**[Table 1]**

| Classification | Alloy Composition (weight%) | | | | | | | | | | |
|---|---|---|---|---|---|---|---|---|---|---|---|
| | C | Si | Mn | P | S | Al | Cr | Mo | V | B | Co |
| Comparative Steel 1 | 0.30 | 0.57 | 1.56 | 0.012 | 0.003 | 0.03 | 0.78 | 0.02 | 0.01 | 0.0012 | - |
| Comparative Steel 2 | 0.52 | 0.69 | 0.79 | 0.011 | 0.002 | 0.02 | 0.34 | 0.55 | 0.05 | 0.0003 | 0.01 |
| Comparative Steel 3 | 0.46 | 0.45 | 1.19 | 0.013 | 0.003 | 0.03 | 0.50 | 0.14 | - | 0.0020 | - |
| Inventive Steel 1 | 0.42 | 0.75 | 1.00 | 0.008 | 0.001 | 0.03 | 0.15 | 0.52 | 0.02 | 0.0015 | 0.01 |
| Invent ive Steel 2 | 0.48 | 0.82 | 0.83 | 0.008 | 0.002 | 0.02 | 0.25 | 0.48 | 0.01 | 0.0021 | 0.01 |
| Invent ive Steel 3 | 0.39 | 0.54 | 1.51 | 0.009 | 0.001 | 0.03 | 0.87 | 0.36 | 0.03 | 0.0018 | 0.01 |
| Inventive Steel 4 | 0.45 | 1.29 | 1.27 | 0.008 | 0.001 | 0.03 | 0.59 | 0.71 | 0.01 | 0.0017 | 0.01 |

**[Table 2]**

| Classification | Alloy Composition (weight%) | | | | | | | | | |
|---|---|---|---|---|---|---|---|---|---|---|
| | Ni | Cu | Ti | Nb | Ca | As | Sn | W | Ac3(°C) | Ms (°C) |
| Comparative Steel 1 | 1.12 | 0.02 | 0.008 | 0.035 | - | - | - | - | 748 | 335 |
| Comparative Steel 2 | 0.56 | 0.16 | 0.013 | 0.017 | - | - | 0.01 | - | 771 | 277 |
| Comparative Steel 3 | 0.06 | 0.21 | 0.015 | 0.026 | 0.001 | - | - | 0.01 | 743 | 300 |
| Inventive Steel 1 | 0.31 | 0.02 | 0.012 | 0.008 | 0.001 | - | 0.01 | - | 775 | 320 |
| Inventive Steel 2 | 0.44 | 0.13 | 0.017 | 0.015 | 0.001 | 0.01 | - | 0.01 | 776 | 296 |
| Inventive Steel 3 | 0.12 | 0.05 | 0.015 | 0.023 | 0.001 | - | 0.01 | - | 761 | 313 |
| Inventive Steel 4 | 0.05 | 0.28 | 0.017 | 0.012 | 0.001 | 0.01 | - | 0.01 | 804 | 297 |

**[Table 3]**

| Classification | Steel Grade No. | Slab heating temper -ature (°C) | Rough rolling temper -ature (°C) | Finish hot-rolling temperature (°C) | Cooling start temper -ature (°C) | Cooling end temper -ature (°C) | Cooling rate (°C/s) | Tempering temper -ature (°C) | Temper -ing time (minutes) | Thick -ness (mm) |
|---|---|---|---|---|---|---|---|---|---|---|
| Comparative example 1 | Compara -tive steel 1 | 1161 | 1048 | 931 | 840 | 21 | 26 | - | - | 30 |
| Comparative example 2 | | 1153 | 1050 | 943 | 842 | 26 | 25 | 402 | 54 | 30 |
| Comparative example 3 | | 1165 | 1023 | 950 | 881 | 256 | 14 | - | - | 50 |
| Comparative example 4 | Compara -tive steel 2 | 1163 | 1045 | 913 | 768 | 35 | 51 | 465 | 23 | 10 |
| Comparative example 5 | | 1162 | 1021 | 941 | 883 | 72 | 17 | - | - | 40 |
| Comparative example 6 | | 1170 | 1030 | 950 | 887 | 43 | 12 | 396 | 81 | 50 |
| Comparative example 7 | Compara -tive steel 3 | 1157 | 1049 | 922 | 824 | 354 | 34 | - | - | 20 |
| Comparative example 8 | | 1162 | 1038 | 941 | 875 | 41 | 15 | - | - | 45 |
| Comparative example 9 | | 1154 | 1019 | 954 | 889 | 18 | 8 | 202 | 98 | 60 |
| Inventive example 1 | Inventive steel 1 | 1162 | 1031 | 918 | 811 | 215 | 48 | 413 | 36 | 20 |
| Comparative example 10 | | 1163 | 1039 | 945 | 856 | 81 | 19 | 238 | - | 40 |
| Inventive example 2 | | 1151 | 1042 | 939 | 874 | 225 | 8 | 393 | 88 | 60 |
| Comparative example 11 | Inventive steel 2 | 1162 | 1045 | 845 | 766 | 276 | 17 | - | - | 25 |
| Inventive example 3 | | 1163 | 1042 | 941 | 870 | 191 | 22 | 430 | 61 | 40 |
| Inventive example 4 | | 1166 | 1041 | 946 | 886 | 127 | 16 | 461 | 75 | 50 |
| Inventive example 5 | Invent ive steel 3 | 1160 | 1040 | 930 | 840 | 123 | 35 | - | - | 20 |
| Inventive example 6 | | 1156 | 1043 | 943 | 861 | 130 | 28 | - | - | 30 |
| Comparative example 12 | | 1160 | 1044 | 942 | 892 | 20 | 4 | 580 | 107 | 60 |
| Inventive example 7 | Inventive steel 4 | 1167 | 1040 | 920 | 838 | 138 | 41 | 400 | 30 | 15 |
| Inventive example 8 | | 1160 | 1043 | 943 | 855 | 146 | 30 | - | - | 30 |
| Inventive example 9 | | 1158 | 1044 | 942 | 872 | 153 | 17 | - | - | 50 |

**[Table 4]**

| Classification | Microstructure (area%) | | | Surface hardness (HB) | Impact toughness (J, @-40°C) | Relational Expression 1 |
|---|---|---|---|---|---|---|
| | M+TM | B | RA | | | |
| Comparative example 1 | 99 | 1 | - | 548 | 12 | 0.46 |
| Comparative example 2 | 99 | 1 | - | 502 | 37 | 0.14 |
| Comparative example 3 | 81 | 14 | 5 | 523 | 59 | 1.68 |
| Comparative example 4 | 99 | 1 | - | 662 | 24 | 0.28 |
| Comparative example 5 | 99 | 1 | - | 716 | 6 | 1.19 |
| Comparative example 6 | 99 | 1 | - | 670 | 18 | 0.37 |
| Comparative example 7 | 62 | 35 | 3 | 406 | 87 | 1.77 |
| Comparative example 8 | 98 | 2 | - | 675 | 7 | 1.93 |
| Comparative example 9 | 99 | 1 | - | 641 | 16 | 0.4 |
| Inventive example 1 | 91 | 4 | 5 | 624 | 60 | 0.94 |
| Comparative example 10 | 79 | 21 | - | 526 | 63 | 1.75 |
| Inventive example 2 | 91 | 6 | 3 | 609 | 55 | 1.00 |
| Comparative example 11 | 67 | 33 | - | 518 | 64 | 2.67 |
| Inventive example 3 | 90 | 6 | 4 | 633 | 58 | 1.09 |
| Inventive example 4 | 93 | 4 | 3 | 617 | 62 | 0.7 |
| Inventive example 5 | 92 | 3 | 5 | 623 | 59 | 0.84 |
| Inventive example 6 | 91 | 5 | 4 | 612 | 58 | 0.95 |
| Comparative example 12 | 69 | 31 | - | 523 | 65 | 2.49 |
| Inventive example 7 | 92 | 6 | 2 | 598 | 53 | 0.90 |
| Inventive example 8 | 91 | 6 | 3 | 604 | 52 | 1.05 |
| Inventive example 9 | 93 | 3 | 4 | 581 | 56 | 0.73 |
| M:martensite , TM:tempered martensite , B: bainite, RA: retained austenite [Relational Expression 1] HB χ J X (1-Vₘ χ 100) (where the HB is the surface hardness of steel measured by Brinell hardness tester, J is the impact absorption energy value at -40°C, and Vm is the area fraction of martensite) | | | | | | |

As can be seen from Tables 1 to 4, it can be seen that in the case of Inventive Examples 1 to 9 satisfying the alloy composition and manufacturing conditions proposed by the present disclosure, the microstructure type and fraction of the present disclosure are satisfied, and the relational expression 1 is satisfied by securing excellent surface hardness and impact toughness.

Meanwhile, in Comparative Examples 1, 2, 3, 5, 6 and 8 which satisfy the manufacturing conditions proposed by the present disclosure but do not satisfy the alloy composition of the present disclosure, it can be seen that the type and fraction of the microstructure of the present disclosure are not satisfied, and furthermore, the required surface hardness, impact toughness or relational expression 1 required in the present disclosure is not satisfied.

It can be seen that Comparative Examples 4, 7 and 9, which do not satisfy the alloy composition and manufacturing conditions proposed by the present disclosure, also do not satisfy the type and fraction of the microstructure of the present disclosure, and also, do not satisfy the surface hardness, impact toughness, or relational expression 1 required in the present disclosure.

On the other hand, it can be seen that in Comparative Examples 10, 11 and 12 which satisfy the alloy composition proposed by the present disclosure, but do not satisfy the manufacturing conditions of the present disclosure, the type and fraction of the microstructure of the present disclosure are not satisfied, and furthermore, the surface hardness or impact toughness required in the present disclosure is not secured, and accordingly, the relational expression 1 is not satisfied.

## Claims

1. A wear-resistant steel having excellent hardness and impact toughness, comprising:
in % by weight, carbon (C) : 0.38 to 0.50%, silicon (Si) : 0.5 to 2.0%, manganese (Mn) : 0.6 to 1.6%, phosphorus (P) : 0.05% or less (excluding 0%), sulfur (S): 0.02% or less (excluding 0%), aluminum (Al): 0.07% or less (excluding 0%), chromium (Cr) : 0.1 to 1.5%, molybdenum (Mo) : 0.01 to 0.8%, vanadium (V) : 0.01 to 0.08%, boron (B): 50ppm or less (excluding 0%), and cobalt (Co): 0.02% or less (excluding 0%), the wear-resistant steel further comprising at least one selected from the group consisting of nickel (Ni) : 0.5% or less (excluding 0%), copper (Cu) : 0.5% or less (excluding 0%), titanium (Ti) : 0.02% or less (excluding 0%), niobium (Nb) : 0.05% or less (excluding 0%) and calcium (Ca): 2 to 100ppm, and containing a balance of Fe and other inevitable impurities,
wherein a microstructure of the wear-resistant steel comprises 85 to 98 area% or more of martensite, 1 to 10% of bainite, and 1 to 10% of retained austenite.

2. The wear-resistant steel having excellent hardness and impact toughness of claim 1, wherein the wear-resistant steel additionally includes at least one selected from the group consisting of arsenic (As): 0.05% or less (excluding 0%), tin (Sn): 0.05% or less (excluding 0%), and tungsten (W): 0.05% or less (excluding 0%).

3. The wear-resistant steel having excellent hardness and impact toughness of claim 1, wherein the wear-resistant steel has a hardness of 550 to 650HB and an impact absorption energy of 47J or more at -40°C, where the HB represents a surface hardness of steel measured by a Brinell hardness tester.

4. The wear-resistant steel having excellent hardness and impact toughness of claim 1, wherein in the wear-resistant steel, a hardness (HB) and a shock absorption energy (J) satisfy a relational expression 1: 0.61 ≤ HB÷J× (1-Vm÷100) ≤ 1.13, where the HB is a surface hardness of steel measured by a Brinell hardness tester, J is an impact absorption energy value at -40°C, and Vm is an area fraction of martensite.

5. A method of manufacturing a wear-resistant steel having excellent hardness and impact toughness, the method comprising:
heating a steel slab at a temperature ranging from 1050 to 1250°C, the steel slab comprising, in % by weight, carbon (C) : 0.38 to 0.50%, silicon (Si) : 0.5 to 2.0%, manganese (Mn) : 0.6 to 1.6%, phosphorus (P) : 0.05% or less (excluding 0%), sulfur (S) : 0.02% or less (excluding 0%), aluminum (Al) : 0.07% or less (excluding 0%), chromium (Cr) : 0.1 to 1.5%, molybdenum (Mo) : 0.01 to 0.8%, vanadium (V) : 0.01 to 0.08%, boron (B) : 50ppm or less (excluding 0%), and cobalt (Co): 0.02% or less (excluding 0%), the wear-resistant steel further comprising at least one selected from the group consisting of nickel (Ni): 0.5% or less (excluding 0%), copper (Cu): 0.5% or less (excluding 0%), titanium (Ti): 0.02% or less (excluding 0%), niobium (Nb): 0.05% or less (excluding 0%) and calcium (Ca): 2 to 100ppm, and containing a balance of Fe and other inevitable impurities;
rough rolling the steel slab reheated, in a temperature range of 950 to 1050°C to obtain a rough-rolled bar;
obtaining a hot-rolled steel sheet by finishing hot-rolling the rough-rolled bar in a temperature range of 850 to 950°C; and
accelerating cooling the hot-rolled steel sheet from a temperature of Ac3+30°C or higher to Ms-50°C or lower at a cooling rate of 5°C/s or higher.

6. The method of manufacturing a wear-resistant steel having excellent hardness and impact toughness of claim 5, wherein the steel slab additionally comprises at least one selected from the group consisting of arsenic (As) : 0.05% or less (excluding 0%), tin (Sn) : 0.05% or less (excluding 0%), and tungsten (W) : 0.05% or less (excluding 0%).

7. The method of manufacturing a wear-resistant steel having excellent hardness and impact toughness of claim 5, further comprising heating the accelerated cooled hot-rolled steel sheet to a temperature range of 350 to 600°C and then heat-treating for 1.3t+5 minutes to 1.3t+20 minutes, where t is plate thickness.
